# EUROPEAN PATENT SPECIFICATION

(11) **EP 2 550 473 B1**
(45) Date of publication and mention of the grant of the patent: **16.03.2016**
(21) Application number: 11711965.1
(22) Date of filing: 24.03.2011
(51) Int. Cl.: F16L 3/10

(54) **CLAMP**
KLEMME
DISPOSITIF DE SERRAGE

(30) Priority: 24.03.2010 GB 201004988
(43) Date of publication of application: 30.01.2013
(73) Proprietor: Graphicshow Cable Accessories (GCA) Limited, Saffron Walden, Essex CB11 3AQ (GB)
(72) Inventor: WINGHAM, Ron, Saffron Walden, Essex CB11 3AQ (GB)
(74) Representative: JENSEN & SON
(86) International application number: PCT/GB2011/000423
(87) International publication number: WO 2011/117585

(56) References cited:
- WO-A1-94/27073
- GB-A- 835 605
- GB-A- 1 468 823

## Description

The present invention relates to a universal clamp for securing cables and pipes having a range of diameters.

Clamps are used in a variety of industries such as construction, rail and telecommunications to secure cables and or pipes to specific structures such as U-shaped channels. This type of structure is commonly used in commercial buildings, car parks and the like.

Typically, a range of 12 clamps is required to secure the standard range of 12 - 85 mm diameter cable and pipes; this can be problematic as substantial stock is needed to secure extensive cable lengths. Further, the technician installing the clamps is required to stock or carry a considerable number of clamps when installing them on a structure.

WO 2009/152363 discloses a stackable variable transmission line hanger for securing cables of a plurality of diameters to a tower or structural element. This device comprises a fixed block and a movable block that locks into the fixed block at four different positions thereby allowing the clamp to secure a cable of one of four different standard diameters. The main problem with this clamp is that it only secures cables conforming to one of the four specified diameters and is not able to fix cables of any other diameter. Further, the construction of the clamp does not allow easy assembly or disassembly by a technician. Other known clamps are disclosed in WO 94/27073.

The present invention aims to provide a clamp for securing a range of cable diameters to standard industrial channels.

According to the present invention there is provided a clamp for a cable or pipe comprising a first clamp part having a support for the cable or pipe, which support has a first profile, the clamp further comprising a second part having a cable or pipe engaging portion, wherein the first and second clamp parts are provided with respective bearing surfaces, the first and second bearing surfaces being adapted to slidingly engage in the installed position, wherein one clamp part is provided with an opening for a connecting rod and the other clamp part is provided with an elongated opening, wherein the profile of the cable or pipe engaging portion is adapted to cooperate with the first profile such that one part is adapted to abut an interior portion of the other part so that the second clamp part is fastened to the first clamp part at different relative positions to allow a variety of cable or pipe sizes to be clamped, the first clamp part comprises at least one further first clamp part bearing surface and the second clamp part comprises a second clamp part further bearing surface, and the at least one first clamp part bearing surface is adapted to cooperate with the second clamp part bearing surface characterised in that the clamp further comprises a head portion adapted to engage with spaced support rails on a generally U-shaped channel and a neck portion adapted to pass through a central opening on the generally U-shaped channel defined by the spaced support rails.

In a preferred embodiment, the support has a substantially curved profile and the separation between a distal and proximal end of the support is approximately a diameter of the curved profile.

In another preferred embodiment, the first clamp part and second clamp part further bearing surfaces are angled and are preferably located at substantially 45° to the vertical axis of the clamp.

Preferably, the first clamp part further comprises two substantially triangular, which substantially triangular walls are located on opposing sides of the first bearing surface, each substantially triangular wall having a thickness, which thickness defines the lateral extent of the first bearing surface, wherein each surface of a respective hypotenuse of the substantially triangular walls is contiguous with a proximal end of the support so that thickness provides the further bearing surfaces and wherein a channel adapted to cooperate with the second clamp part) is formed by the first bearing surface and the substantially triangular walls.

Ideally, the second bearing surface is slidable within the channel formed by the first bearing surface and the triangular walls. Preferably, the second clamp part further bearing surface is a proximal end spatially located substantially intermediate to an upper end and a free end of the second clamp part.

In a preferred embodiment, the first bearing surface comprises a wall located on a side opposite to the support, which wall is adapted to abut the upper edge of the second clamp part thereby aligning the second clamp part with the first clamp part.

In another preferred embodiment, the clamp comprises a ridge adapted to cooperatively engage with an undercut on another cooperating second clamp part or the spaced support rails on the generally U-shaped channel and maintain the clamp parallel to an undercut on another cooperating second clamp part or the generally U-shaped channel when secured by a bolt and nuts.

Preferably, when the ridge is cooperatively engaged with another cooperating second clamp part, the clamp remains in the same position relative to another clamp.

The clamp of the invention is mountable on standard channels, both vertical and horizontal. Accordingly, it provides a clear advantage over prior art clamps because it is possible to install it on existing systems without adding any additional elements. Further, there is no need to use intermediate parts as the clamp locks directly into the standard channel. When fixed to a horizontal channel, a head portion secures the clamp to said channel. Alternatively, the clamp comprises a protrusion which may be used to locate and secure it on a vertical channel.

In addition, only six of the clamps described by herein are necessary for securing 12 - 85 mm of cable or pipe, that is half the number of prior art clamps required to secure the same length of cable or pipe.

An exemplary embodiment of the present invention will now be described in greater detail with reference to the following figures, in which:

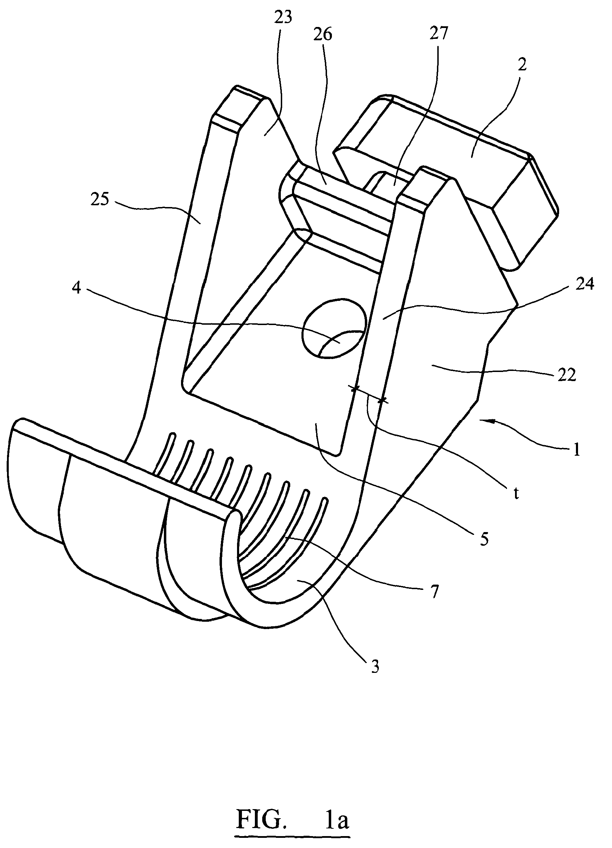

Figure 1a is perspective view of a first part;
Figure 1 b is a perspective view of the back of a first part;
Figure 2a is a perspective view of a second part;
Figure 2b is a perspective view of the back of a second part;
Figure 3 is a perspective view of how the first part inter-engages with the second part;
Figure 4 shows three identical clamps securing cables of different diameters while fixed to a standard channel;
Figure 5 shows a clamp fixed to a standard channel and secured by a bolt and nut;
Figure 6 illustrates how the clamp of the present invention is assembled when mounted on a standard channel;
Figure 7 shows rotation of the head portion to secure or disengage the first part on a standard channel;
Figure 8 shows three clamps mounted on a vertical standard channel.

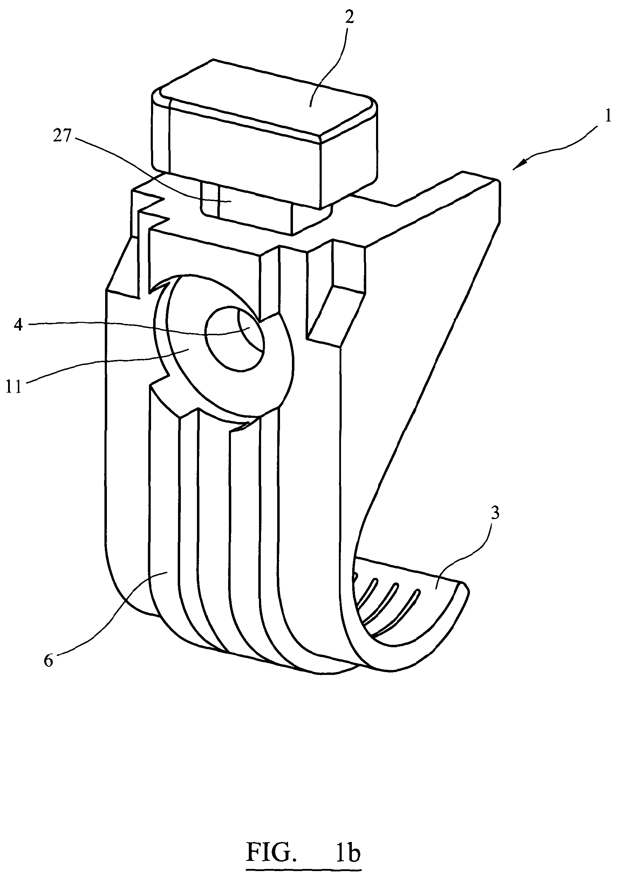

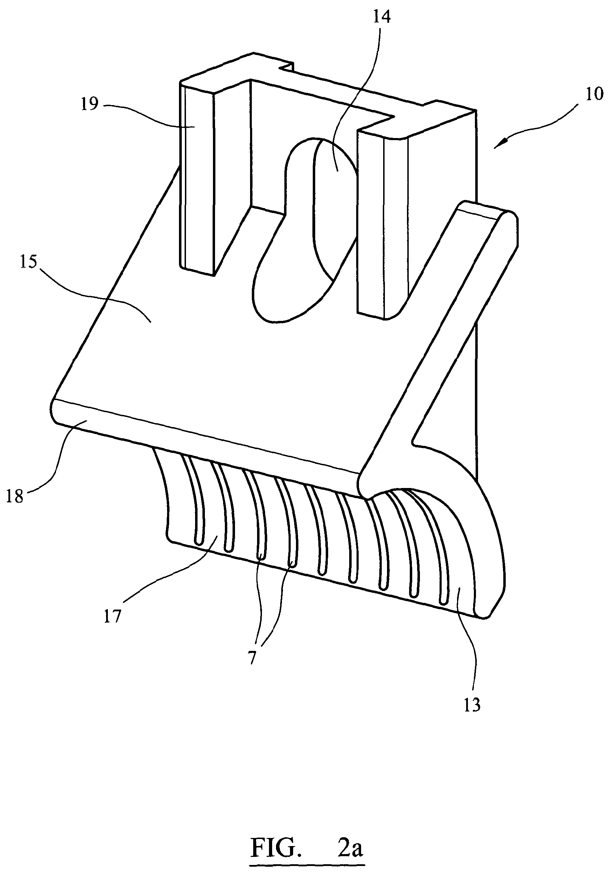

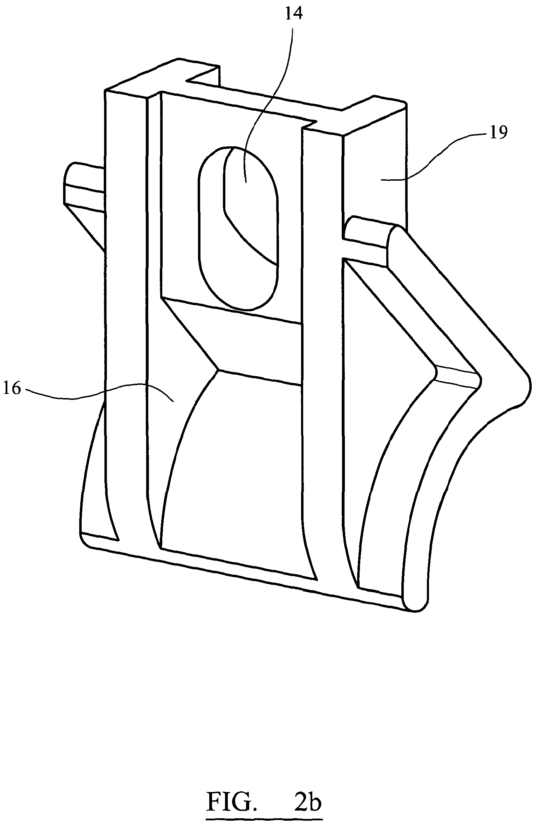

Referring now to Figure 1 a, there is shown a first part 1 of the clamp of the invention having a generally J-shaped hook profile having a width approximately half of vertical height of the clamp part. The first clamp part 1 comprises a curved support 3 forming the lower part of the clamp part to receive a cable or pipe. The curved support 3 has a substantially semi-circular profile and is oriented such that a chord between the proximal and distal ends of the curve would be approximately at 45° to a vertical axis of the clamp. Contiguous with the support 3, the first clamp part 1 further comprises an intermediate portion having a first bearing surface 5 adapted to abut a second clamp part; said first bearing surface 5 has a circular opening 4 adapted to receive a threaded rod or bolt in use located approximately centrally between two opposed and upstanding triangular walls 22, 23, each having a thickness t, which defines the lateral extent of first bearing surface 5. The surfaces 24, 25 of the hypotenuse of the triangular walls 22, 23 are contiguous with the proximal end of the curved support 3 so that thickness t provides, when installed, first and second surfaces 24, 25 adapted to cooperate with a corresponding surface on a second clamp part described below with reference to Figure 2. The triangular walls are approximately perpendicular to the chord between the proximal and distal ends of the curved support 3. A further wall 26 defines the space between the first bearing surface 5 and the neck portion 27. The first clamp part 1 also comprises a projecting portion or projecting portions 6 which overhang from the reverse side of said first part 1. The opposite end to the distal end of the support 3 comprises a head portion 2 adapted to engage in the installed position with support rails on a channel and neck portion 27 adapted to pass through said channel. The support 3 comprises a plurality of equidistantly spaced grooves 7 to grip cables securely. Such grooves may be optional depending on the application of the clamp and a similar effect may be achieved by a plurality of upstanding ribs.

Figure 1 b shows the reverse side 9 of the first clamp part 1. Extending from the upper edge of the intermediate body to the support 3 is a projecting ridge 6 having a width of approximately half the width of the clamp part 1. The circular opening 4 is adapted to receive, in use, a threaded rod or bolt and is located within a circular undercut 11 through the projecting ridge and intermediate body. The undercut 11 has a diameter slightly greater than the width of the ridge 6. In use, the undercut 11 allows a nut to be fastened to a threaded rod or bolt without protruding from the clamp and provides some guidance for the nut. The projecting ridge 6 is adapted to cooperatively engage with a corresponding recess on a second clamp part as described below thereby allowing two clamps to be stacked securely.

Figure 2a shows a second clamp part 10 having the same width as the first clamp part but with a vertical height only slightly greater than the width. The lower part of the clamp part has a curved profile 13 with a free end 17 and a further proximal end 18 spatially located approximately intermediate to the upper end and the free end 17. The curved profile 13 has substantially the same radius of curvature as the support 3 but a chord between the two ends of the curved profile would have a length approximately equal to the radius of curvature. A bearing surface 15 is contiguous with the chamfered edge of the proximal end 18 and is arranged at 45° to the vertical plane of the clamp part. The second bearing surface 15 is adapted to abut the first bearing surface 5 in the assembled position. A further surface 19 in the vertical plane of the second clamp part 10 is upstanding from the angled bearing surface 15 and is located such that the side walls of surface 19 are located a thickness t from the respective edges of the second clamp part and thereby adapted to be located in the channel formed by the substantially triangular walls 22, 23 of the first clamp part 1. The second part 10 also comprises a slotted opening 14 located in the surface 19 and extending into the surface 15, which is adapted to receive a threaded rod or bolt and allow said threaded rod or bolt to move up and down thereby enabling the second clamp part 10 to be fastened to the first clamp part 1 at different relative positions. The slot has a vertical length approximately twice the diameter of the curved part/width of the slot. The curved profile 13 is capable of cooperating with the support 3 thus allowing a wide variety of cable sizes to be clamped. For example, if the cable is small, the second curved profile 13 will not stop at a perfectly circular shape but will form a smaller oval shape. The thickness of the portion of the clamp part having the bearing surface 19 is approximately half the height of the opposite wall of the triangular walls 22, 23 of the first clamp part 1. In other words, the spatial separation between the proximal and distal ends of the curved portions of the second clamp part 10 is less than the spatial separation between the proximal and distal ends of the curved support of the first clamp part 1. Thus, when holding a cable having a diameter smaller than the diameter of the support 3, the curved profile 13 cooperates with the support 3 and abuts said support 3 thereby securing the smaller cable. The curved profile 13 may also comprise a plurality of equidistantly spaced grooves 7 to grip cables securely. Alternatively upstanding ribs could be used or a smooth surface depending on the application.

Figure 2b shows the reverse side of surface 19, which surface 19 comprises an intermediate undercut 16 adapted to cooperate with the first projecting ridge 6 on a first clamp part 1 when two or more clamps are stacked. The substantially slotted opening 14 is adapted to receive a threaded rod or bolt.

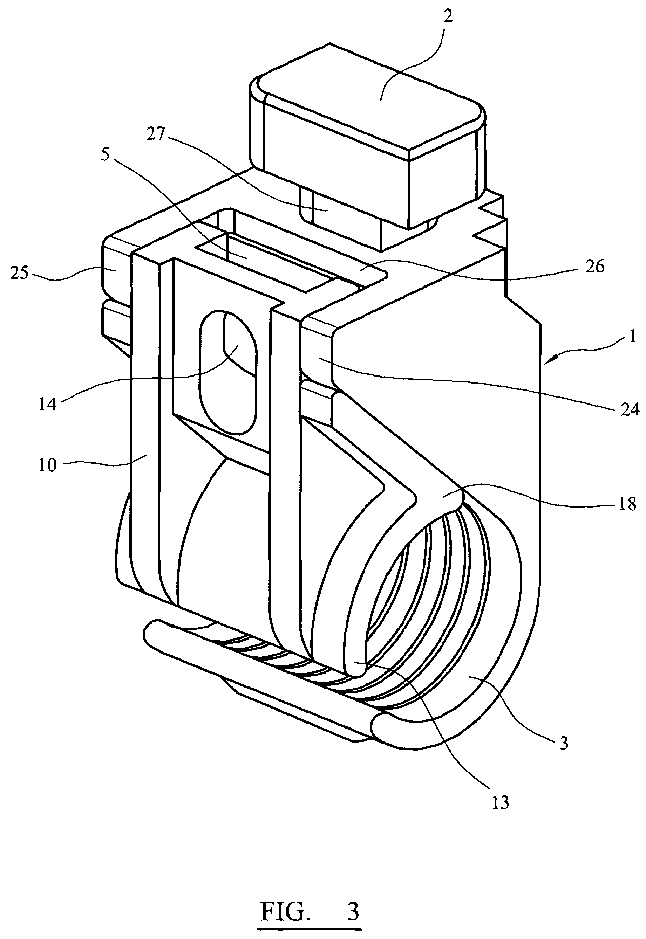

Figure 3 shows the first 1 and second clamp parts 10 assembled into the clamp of the present invention. As mentioned above, the support 3 is adapted to receive a cable or pipe whereas the curved profile 13 is adapted to secure said cable or clamp and cooperate with the support 3. The first bearing surface 5 abuts the front of the second bearing surface 15 while the surfaces 24, 25 abut the further proximal end 18. As the surfaces 24, 25 and the further proximal end 18 are angled at approximately 45° to the vertical, the second clamp part 10 is slidable relative to the first clamp part 1 such that the angled surfaces remain engaged. Further, the second bearing portion 15 is slidable within the channel formed by the triangular walls 22, 23 and the first bearing portion 5. However, in the furthest position only the respective side walls engage. The further wall 26 prevents the second bearing surface 15 from sliding towards the neck portion 27. A threaded rod or bolt or other fastening means can pass through both the circular and slotted openings 4, 14 in both parts 1, 10 to secure the clamp or a plurality of clamps in the closed position. The neck portion 27 allows the clamp to be mounted on a horizontal or vertical standard channel while the head portion 2 ensures that the clamp is secured to a standard channel as it is wider than a channel opening.

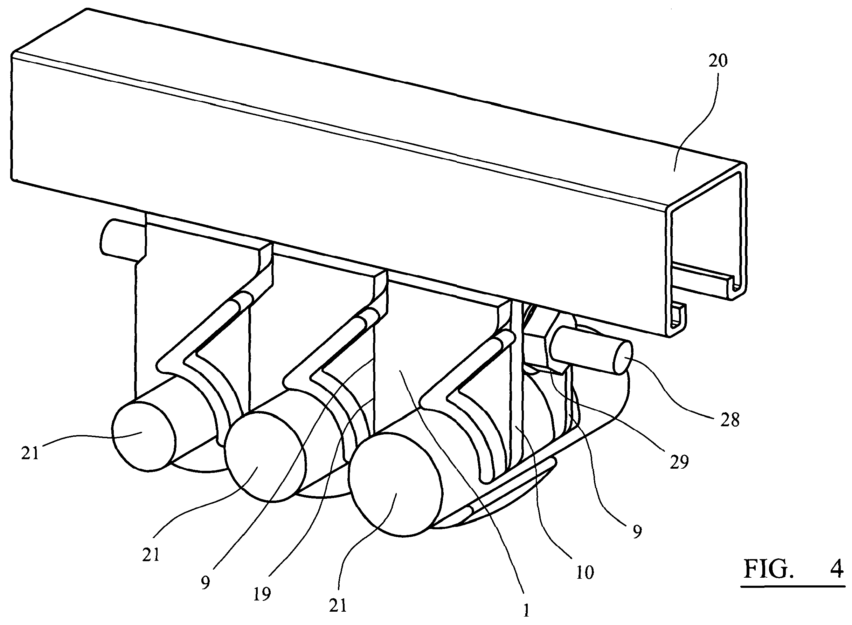

Figure 4 shows three clamps according to the present invention securing three cables 21 of different diameters. A bolt 28 passes through the circular and slotted openings 4, 14 to fasten the clamp parts 1, 10 to each other and secure the cable 21 held in between said parts 1, 10. The reverse side of surface 19 of a first clamp abuts against the reverse side 9 of a second clamp. The individual clamps of the stack are secured to one another by the bolt 28 and nuts 29. The plurality of clamps is mounted on a standard U profile channel 20 and secured thereto by the respective head portions 2 resting on the flanged lips of the U channel with the respective neck portions 27 hanging between the opposed flanged lips. As shown on the clamp on the right, the second bearing surface 15 is located within the channel formed by the first bearing surface 5 and the triangular walls 22, 23 and prevented from sliding towards the neck portion 27 by the further wall 26. The second clamp part 10 may slide up and down relative to the first part 1 thus; the clamp is capable of forming an oval shaped orifice to hold smaller diameter cables 21 or an elliptical shaped orifice to hold larger diameter cables 21. As a result, the clamp disclosed in the present application can secure a wide variety of cable 21 diameters, including the most common, 25 mm for example, and other non-standard sizes. Further, the clamp may be scaled up or down to secure diameters not covered by the standard range. Moreover, minor differences in standard cable diameters are unimportant as the clamp holds the cable's 21 exact diameter. As a result, there is a significantly reduced need to use different types of clamps for cables of different diameters installed in parallel. Furthermore, it is possible to stack additional clamps provided a threaded rod 28 of the appropriate length is used. In addition, the construction of the clamp allows an installer to simply undo the outer nut 29 to add extra clamps.

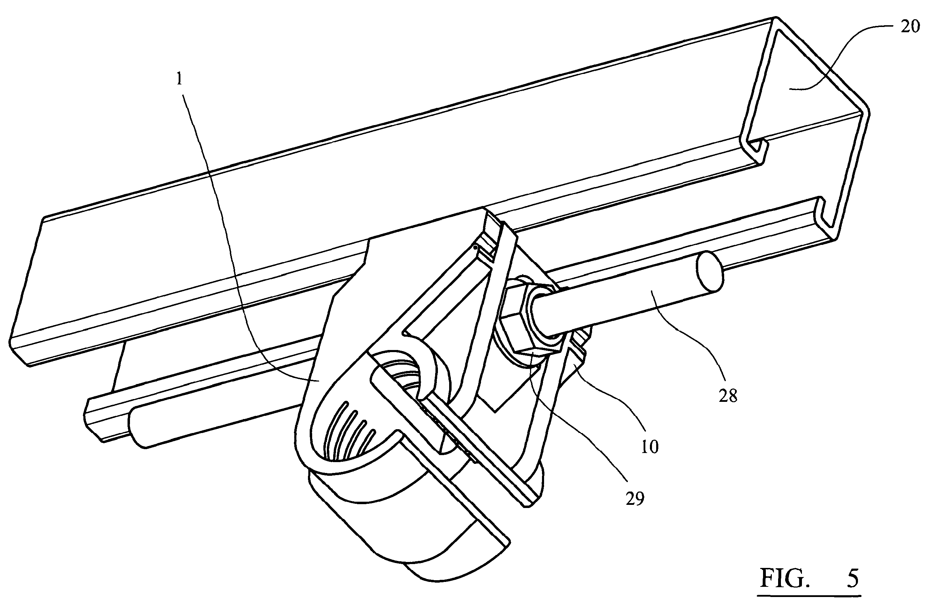

Figure 5 shows the clamp installed on a standard channel 20. The first 1 and second part 10 are secured by nuts 29 and a bolt 28 which passes through the circular and slotted opening 4, 14. The head portion 2 allows the clamp to slide through the standard channel 20 while assembled. Twisting the clamp and, therefore, repositioning the head and neck portions 2, 27 in relation to the standard channel 20 allows an operator to unfasten the clamp from said standard channel 20.

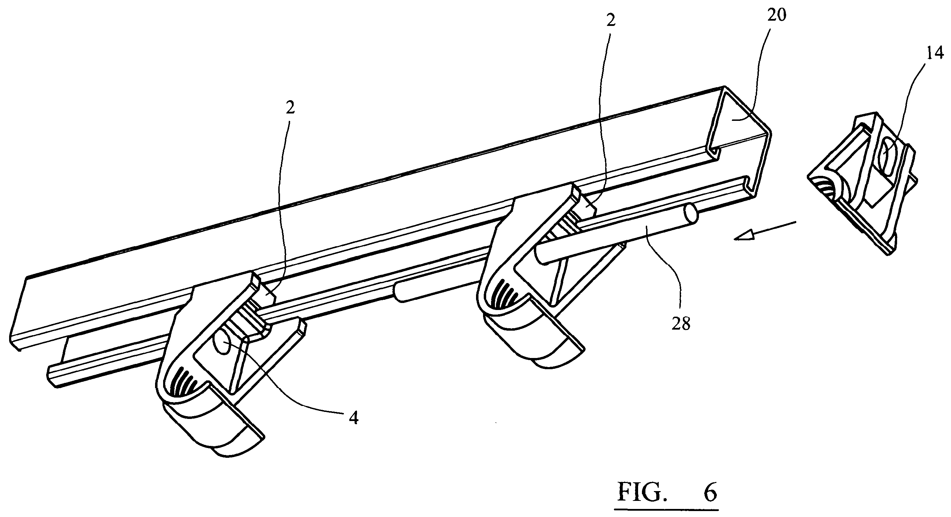

Figure 6 shows the steps necessary to assemble the clamp of the present invention. The head portion 2 is mounted on a standard channel 20 while the neck portion 27 passes through the channel opening, then a bolt or threaded rod 28 is fixed through the circular opening 4, subsequently, the second clamp part 10 is mounted on the bolt or threaded rod 28 and a nut or nuts 29 (not shown) are fastened to the end of the bolt or the ends of the threaded rod 28 as necessary. It will be appreciated that the cable or pipe 21 may be placed on the support 3 during installation, thereby, freeing the installer's hands and allowing him to fix and tighten the clamp at his convenience.

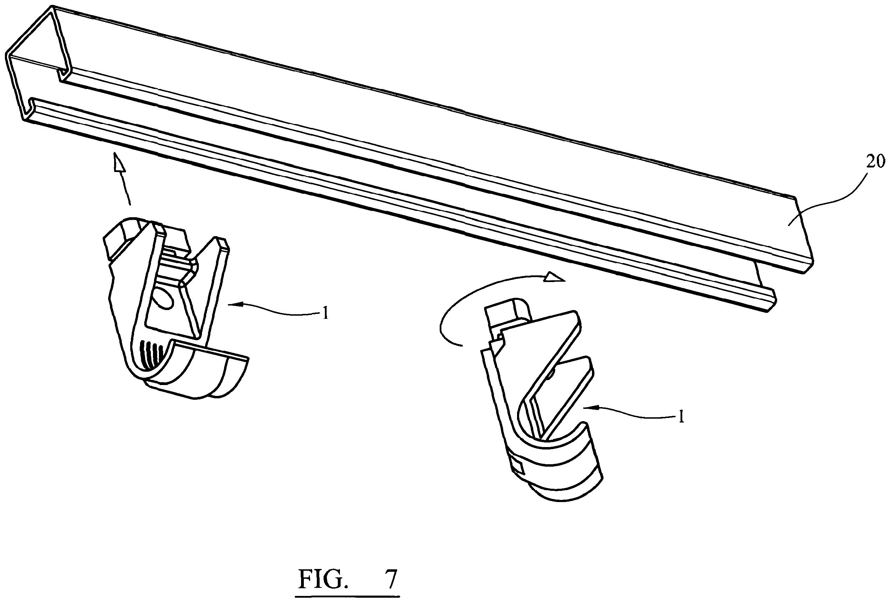

Figure 7 illustrates the mounting of the first clamp part 1 on a standard channel 20. The first clamp part 1 is located beneath the standard channel 20 while the narrowest point of the head portion 2 is parallel to the channel 20; once the first clamp part 1 has been inserted into the channel 20, said first part 1 is rotated by approximately 180° to ensure that the narrowest part of the head portion 2 is perpendicular to the channel opening and thus the clamp is secured onto the standard channel 20.

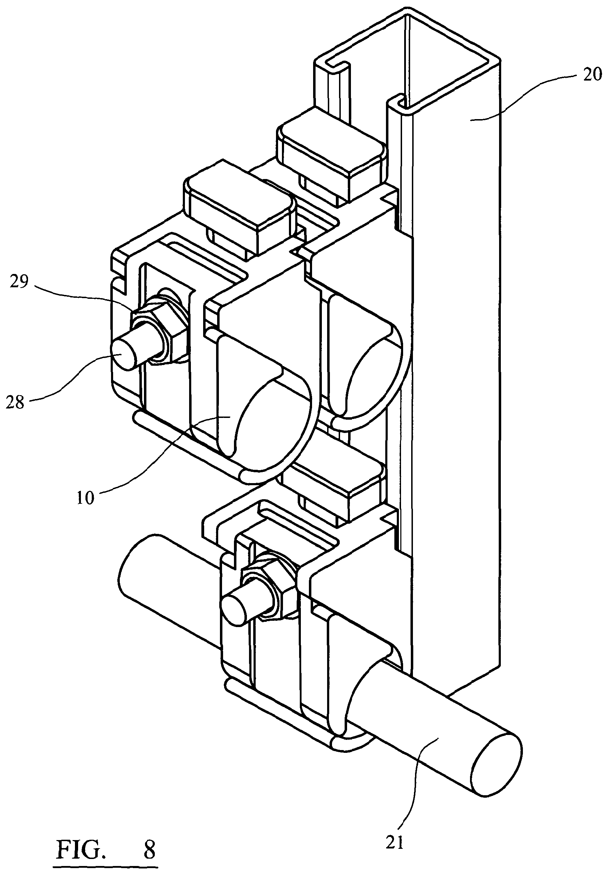

Figure 8 shows the clamp of the present invention mounted on a vertical standard channel 20. When used on a vertical channel, the projecting ridge 6 is adapted to maintain the clamp within the channel opening while the reverse side 9 of the first clamp part 1 abuts the outer surface of the flanged lips. The clamp is secured to the channel by a bolt 28 which passes through a plate (not shown) having a bearing surface with two parallel grooves adapted to abut the flanged lips on the standard channel. The plate, for example, a M10 spring nut known in the art as Zebedee nut, further comprises, on its reverse side, a spring adapted to secure the plate to the back of the standard channel and thereby prevent movement of the clamp. As seen in this Figure the assembled clamp has the same width as the standard channel 20 and can be stacked by using the same bolt 28 which used to secure the clamp to the channel 20 and nuts 29. While stacked, a clamp remains in the same relative position in respect to a second clamp regardless of whether the clamps are secured to a horizontal or vertical channel 20.

In an alternative embodiment, the concave surface of the support 3 and the curved profile 13 may be smooth to secure certain types of cable or pipes 21.

It will be apparent that the clamp of the present invention is suitable for use in car parks, industrial sites, underground rail systems or any other environment in which standard industry channels 20 are used. Further, it is also plain that the clamp may be made of various materials, such as glass-filled nylon, flame retardant L.S.F., aluminium and other plastic materials, in accordance with the specific environment in which it will be used.

## Claims

1. A clamp for a cable or pipe comprising a first clamp part (1) having a support (3) for a cable or pipe (21), which support (3) has a first profile, the clamp further comprising a second part (10) having a cable or pipe engaging portion (13), wherein the first (1) and second (10) clamp parts are provided with respective bearing surfaces (5, 15), the first and second bearing surfaces (5, 15) being adapted to slidingly engage in the installed position, wherein one clamp part is provided with an opening (4) for a connecting rod and the other clamp part is provided with an elongated opening (14), wherein the profile of the cable or pipe engaging portion (13) is adapted to cooperate with the first profile such that one part is adapted to abut an interior portion of the other part so that the second clamp part (10) is fastened to the first clamp part (1) at different relative positions to allow a variety of cable or pipe sizes to be clamped, the first clamp part (1) comprises at least one first clamp part further bearing surface (24, 25) and the second clamp part (10) comprises a second clamp part further bearing surface (18), and the at least one first clamp part further bearing surface (24, 25) is adapted to cooperate with the second clamp further bearing surface (18)), **characterised in that**
the clamp further comprises a head portion (2) adapted to engage with spaced support rails on a generally U-shaped channel (20) and a neck portion (27) adapted to pass through a central opening on the generally U-shaped channel (20) defined by the spaced support rails.

2. A clamp according to Claim 1, wherein the support (3) has a substantially curved profile and the separation between a distal and proximal end of the support (3) is approximately a diameter of the curved profile.

3. A clamp according to Claims 1 or 2, wherein the first clamp part and second clamp part further bearing surfaces (18, 24, 25) are angled relative to the vertical axis of the clamp.

4. A clamp according to any one of the preceding Claims, wherein the first clamp part and second clamp part further bearing surfaces (18, 24, 25) are located at substantially 45° to the vertical axis of the clamp.

5. A clamp according to any one of the preceding Claims, wherein the first clamp part (1) further comprises two substantially triangular walls (22, 23), which substantially triangular walls (22, 23) are located on opposing sides of the first bearing surface (5), each substantially triangular wall (22, 23) having a thickness (t), which thickness (t) defines the lateral extent of the first bearing surface (5), wherein each surface of a respective hypotenuse of the substantially triangular walls (22, 23) is contiguous with a proximal end of the support (3) so that thickness (t) provides the further bearing surfaces (24, 25) and wherein a channel adapted to cooperate with the second clamp part (10) is formed by the first bearing surface (5) and the substantially triangular walls (22, 23).

6. A clamp according to Claim 5, wherein the second bearing surface (15) is slidable within the channel formed by the first bearing surface (5) and the triangular walls (22, 23).

7. A clamp according to Claim 5, wherein the second clamp part further bearing surface (18) is a proximal end spatially located substantially intermediate to an upper end and a free end (17) of the second clamp part (10).

8. A clamp according to any one of the preceding Claims, wherein the first bearing surface (5) comprises a wall (26) located on a side opposite to the support (3), which wall (26) is adapted to abut the upper edge of the second clamp part (10) thereby aligning the second clamp (10) part with the first clamp part (1).

9. A clamp according to any one of the preceding Claims, further comprising a ridge (6) adapted to cooperatively engage with an undercut (16) on another cooperating second clamp part or the spaced support rails on the generally U-shaped channel (20) and maintain the clamp parallel to the undercut (16) on another second clamp part or the generally U-shaped channel (20) when secured by a bolt (28) and nuts (29).

10. A clamp according to Claim 9, wherein, when the ridge (6) is cooperatively engaged with another cooperating second clamp part, the clamp remains in the same position relative to another clamp.

## Patentansprüche

1. Schelle für ein Kabel oder Rohr, umfassend ein erstes Schellenteil (1) mit einer ein erstes Profil aufweisenden Stütze (3) für ein Kabel oder Rohr (21), und ein zweites Teil (10) mit einer Kabel- oder Rohr-Eingriffpartie (13), wobei das erste (1) und das zweite (10) Schellenteil mit entsprechenden Lagerflächen (5, 15) versehen sind und die erste und die zweite Lagerfläche (5, 15) in der montierten Position für Gleiteingriff ausgelegt sind, wobei ein Schellenteil mit einer Öffnung (4) für eine Verbindungsstange und das andere Schellenteil mit einer länglichen Öffnung (14) versehen ist, wobei das Profil der Kabel- oder Rohr-Eingriffpartie (13) für ein derartiges Zusammenwirken mit dem ersten Profil ausgelegt ist, dass ein Teil auf eine Innenpartie des anderen Teils auftrifft, so dass das zweite Schellenteil (10) in verschiedenen Relativpositionen am ersten Schellenteil (1) befestigt wird, um das Klemmen verschiedener Kabel- oder Rohrgrößem zu ermöglichen, wobei das erste Schellenteil (1) mindestens eine weitere Lagerfläche (24, 25) für das erste Schellenteil aufweist und das zweite Schellenteil (10) eine weitere Lagerfläche (18) für das zweite Schellenteil aufweist und wobei die mindestens eine weitere Lagerfläche (24, 25) für das erste Schellenteil für Zusammenwirken mit der Lagerfläche (18) für das zweite Schellenteil ausgelegt ist,
**dadurch gekennzeichnet, dass**
die Schelle weiter eine für Eingriff mit voneinander beabstandeten Tragschienen an einem im Allgemeinen U-förmigen Kanal (20) ausgelegte Kopfpartie (2) und eine für Durchgang durch eine mittige Öffnung in dem von den voneinander beabstandeten Tragschienen definierten im Allgemeinen U-förmigen Kanal (20) ausgelegte Halspartie (27) aufweist.

2. Schelle nach Anspruch 1, wobei die Stütze (3) ein im Wesentlichen gekrümmtes Profil hat und die Trennung zwischen einem distalen und einem proximalen Ende der Stütze (3) ungefähr einem Durchmesser des gekrümmten Profils entspricht.

3. Schelle nach Anspruch 1 oder 2, wobei die weiteren Lagerflächen (18, 24, 25) für das erste und das zweite Schellenteil relativ zur Senkrechtachse der Schelle in einem Winkel ausgerichtet sind.

4. Schelle nach einem der vorhergehenden Ansprüche, wobei die weiteren Lagerflächen (18, 24, 25) für das erste und das zweite Schellenteil im Wesentlichen in einem Winkel von 45 Grad relativ zur Senkrechtachse der Schelle ausgerichtet sind.

5. Schelle nach einem der vorhergehenden Ansprüche, wobei das erste Schellenteil (1) weiter zwei im Wesentlichen dreieckige Wände (22, 23) aufweist, die auf einander gegenüber liegenden Seiten der ersten Lagerfläche (5) angeordnet sind, wobei die im Wesentlichen dreieckigen Wände (22, 23) jeweils eine Dicke (t) haben, die die Lateraldimension der ersten Lagerfläche (5) definiert, wobei jede Oberfläche einer jeweiligen Hypotenuse der Wesentlichen dreieckigen Wände (22, 23) an ein proximales Ende der Stütze (3) angrenzt, so dass die Dicke (t) die weiteren Lagerflächen (24, 25) bereitstellt, und wobei die erste Lagerfläche (5) und die im Wesentlichen dreieckigen Wände (22, 23) einen für Zusammenwirken mit dem zweiten Schellenteil (10) ausgelegten Kanal bilden.

6. Schelle nach Anspruch 5, wobei die zweite Lagerfläche (15) innerhalb des von der ersten Lagerfläche (5) und den dreieckigen Wänden (22, 23) gebildeten Kanals gleitbar ist.

7. Schelle nach Anspruch 5, wobei die Lagerfläche (18) für das zweite Schellenteil ein proximales Ende ist, das räumlich im Wesentlichen zwischen einem oberen Ende und einem freien Ende (17) des zweiten Schellenteils (10) angeordnet ist.

8. Schelle nach einem der vorhergehenden Ansprüche, wobei die erste Lagerfläche (5) eine Wand (26) umfasst, die auf einer Seite gegenüber der Stütze (3) angeordnet ist, wobei die Wand (26) an den oberen Rand des zweiten Schellenteils (10) anstößt und dadurch das zweite Schellenteil (10) nach dem ersten Schellenteil (1) ausrichtet.

9. Schelle nach einem der vorhergehenden Ansprüche, weiter umfassend eine Erhöhung (6), die bei Befestigung durch eine Schraube (28) und Muttern (29) zum zusammenwirkenden Eingriff mit einem Hinterschnitt (16) an einem zusammenwirkenden zweiten Schellenteil oder oder an den voneinander beabstandeten Tragschienen an dem im Allgemeinen U-förmigen Kanal (20) und zum Parallelhalten der Schelle mit dem Hinterschnitt (16) an einem weiteren zweiten Schellenteil oder mit dem im Allgemeinen U-förmigen Kanal (20) ausgelegt ist.

10. Schelle nach Anspruch 9, wobei die Schelle im Verhältnis zu einer anderen Schelle in der selben Lage bleibt, wenn die Erhöhung (6) im zusammenwirkenden Eingriff mit einem weiteren zusammenwirkenden zweiten Schellenteil ist.

## Revendications

1. Dispositif de serrage pour un câble ou un tuyau comprenant une première partie (1) de dispositif de serrage ayant un support (3) pour un câble ou un tuyau (21), ledit support (3) a un premier profilé, le dispositif de serrage comprenant en outre une seconde partie (10) ayant une partie (13) d'engagement de câble ou de tuyau, la première (1) et la seconde partie (10) de dispositif de serrage étant dotées de parties (5, 15) d'appui, la première et la seconde parties (5, 15) d'appui étant conçues pour s'engager de manière coulissante dans la position installée, une partie de dispositif de serrage étant doté d'un orifice (4) pour une tige de liaison et l'autre partie de dispositif de serrage étant dotée d'un orifice allongé (14), le profilé de la section (13) d'engagement de câble ou de tuyau étant conçu pour coopérer avec le premier profilé de sorte qu'une partie soit conçue pour venir en butée contre une section intérieure de l'autre partie pour que la seconde partie (10) de dispositif de serrage soit fixée à la première partie (1) de dispositif de serrage à différentes positions relatives pour permettre de serrer un large choix de tailles de câble ou de tuyau, la première partie (1) de dispositif de serrage comprenant au moins une autre surface (24, 25) d'appui de première partie de dispositif de serrage et la seconde partie (10) de dispositif de serrage comprenant une autre surface (18) d'appui de seconde partie de dispositif de serrage et ladite autre surface (24, 25) de première partie de dispositif de serrage est conçue pour coopérer avec l'autre surface (18) d'appui de seconde partie de dispositif de serrage, **caractérisé en ce que** le dispositif de serrage comprend en outre une partie tête (2) conçue pour s'engager dans des rails de support sur un canal (20) généralement en forme de U et une partie (27) de collet conçue pour traverser un orifice central disposé sur le canal (20) généralement en forme de U délimité par des rails de support espacés.

2. Dispositif de serrage selon la revendication 1, le support (3) ayant un profilé essentiellement incurvé et la séparation entre une extrémité distale et proximale du support (3) étant approximativement un diamètre du profilé incurvé.

3. Dispositif de serrage selon la revendication 1 ou 2, les surfaces (18, 24, 25) d'appui de la première partie et la seconde partie de dispositif de serrage étant inclinées par rapport à l'axe vertical du dispositif de serrage.

4. Dispositif de serrage selon l'une quelconque des revendications précédentes, les autres surfaces (18, 24, 25) d'appui de la première partie et la seconde partie de dispositif de serrage étant situées essentiellement à 45 ° de l'axe vertical du dispositif de serrage.

5. Dispositif de serrage selon l'une quelconque des revendications précédentes, la première partie (1) de dispositif de serrage comprenant deux parois (22, 23) essentiellement triangulaires, lesdites parois (22, 23) essentiellement triangulaires étant situées sur des côtés en regard de la première surface d'appui (5), chaque paroi essentiellement triangulaire (22, 23) ayant une épaisseur (t), ladite épaisseur (t) délimitant l'étendue latérale de la première surface (5) d'appui, chaque surface d'une hypoténuse respective des parois essentiellement triangulaires (22, 23) étant contigüe à une extrémité proximale du support (3) pour que l'épaisseur (t) fournisse les autres surfaces (24, 25) d'appui et un canal conçu pour coopérer avec la seconde partie (10) de dispositif de serrage étant formé par la première surface (5) d'appui et les parois essentiellement triangulaires (22, 23).

6. Dispositif de serrage selon la revendication 5, la seconde surface (15) d'appui pouvant coulissant dans le canal formé par la première surface (5) d'appui et les parois essentiellement triangulaires (22, 23).

7. Dispositif de serrage selon la revendication 5, l'autre surface (18) d'appui de première partie de dispositif de serrage étant une extrémité proximale située spatialement essentiellement entre une extrémité supérieure et une extrémité libre (17) de la seconde partie (10) de dispositif de serrage.

8. Dispositif de serrage selon l'une quelconque des revendications précédentes, la première surface (5) d'appui comprenant une paroi (26) située sur un coté en regard du support (3), ladite paroi (26) étant conçue pour venir en butée contre le bord supérieur de la seconde partie (10) de dispositif de serrage, alignant ainsi la seconde partie (10) de dispositif de serrage avec la première partie (1) de dispositif de serrage.

9. Dispositif de serrage selon l'une quelconque des revendications précédentes, comprenant en outre la saille (6) conçue pour s'engager en coopération avec une contre-dépouille (16) sur une autre seconde partie de dispositif de serrage en coopération ou les rails de support espacés sur le canal (20) généralement en forme de U et pour maintenir le dispositif de serrage parallèle à la contre-dépouille (16) sur une seconde partie de dispositif de serrage ou le canal (20) généralement en forme de U lorsque fixé par un boulon (28) et des écrous (29).

10. Dispositif de serrage selon la revendication 9, la seconde saillie (6) s'engage en coopération avec une autre partie de dispositif de serrage en coopération, le dispositif demeure dans la même position par rapport à un autre dispositif de serrage.
